# EUROPEAN PATENT SPECIFICATION

(11) **EP 3 368 772 B1**
(45) Date of publication and mention of the grant of the patent: **31.07.2019**
(21) Application number: 16795141.7
(22) Date of filing: 15.09.2016
(51) Int. Cl.: F04D 15/00, F01P 5/10, F16K 11/085, F16K 31/04

(54) **EXTRACTABLE VALVE GROUP WITH OBTURATOR GROUP WITH A PLURALITY OF ACTIVE PORTIONS**
HERAUSZIEHBARE VENTILGRUPPE MIT OBTURATORGRUPPE MIT MEHREREN AKTIVEN TEILEN
GROUPE DE VANNES EXTRACTIBLE COMPRENANT UN GROUPE OBTURATEUR AYANT UNE PLURALITÉ DE PARTIES ACTIVES

(30) Priority: 30.10.2015 IT UB20155338
(43) Date of publication of application: 05.09.2018
(73) Proprietor: Industrie Saleri Italo S.P.A., 25065 Lumezzane, Brescia (IT)
(72) Inventor: BELCUORE, Daniele, 25065 Lumezzane (Brescia) (IT); RAVELLI, Alessandro, 25065 Lumezzane (Brescia) (IT); PEDERSOLI, Marco, 25065 Lumezzane (Brescia) (IT)
(74) Representative: Gamba, Alessandro
(86) International application number: PCT/IB2016/055493
(87) International publication number: WO 2017/072604

(56) References cited:
- EP-A1- 1 653 311
- EP-A1- 2 815 094
- WO-A1-2006/010806
- WO-A1-2015/059586
- WO-A2-2005/061867
- WO-A2-2014/078255
- DE-A1-102006 055 536

## Description

This invention relates to a pump for a cooling circuit of a vehicle that comprises valve group.

It is well known that the cooling pump, and the corrponents that corrpose it, are the most important elements of a cooling circuit of heat engines, especially in vehicles.

Thus, great attention is paid to the proper design of these components and the continuous improvement of their performance.

One of the main problems of said type of corrponents is that of achieving effective cooling of the vehicle engine and its parts. In other words, it is essential that the pump group be suitable for efficiently moving a predefined amount of cooling liquid and, at the same time, it is crucial that the valve groups be capable of effectively regulating the flow, for example by obstructing and/or choki ng the passage of the cooling liquid. In other words, dependi ng on the conditions in which the vehicle operates, i.e., as a function of both the mode of use of the vehicle and environmental conditions, the pump group must be able to regulate, for example by means of the valve group, the quantity of cooling liquid circulating in the system, for example by cooling the engine when it is operating at full speed and avoiding cooling it when just started or in the post-run phase.

Note that it is always required that the valve groups perform operations of partial or total obstruction of the passage of cooling liquid in a manner that is simple but, especially, effective and reproducible over time. This means that the valve groups must be effective in operations of obstruction, without however compromising their durability and without burdening the movement means that move the specific components of the valve group suitable to perform said obstruction.

Another requirement is also that of cooling in an effective manner, in accordance with what is described above, not only the engine of the vehicle, but also additional components or systems, suitable to allow the regulation of the cooling liquid circulation in the respective circuits, for example, by distinguishing the main circuit, such as that which allows cooling the engine, from the by-pass circuit, thanks to which, instead, the other components are cooled.

A still further requirement is, also, that in a vehicle there is typically a lack of space for the various components and it is therefore particularly difficult, if not impossible some cases, to add one or more components, even inside the pump group itself.

Examples of known pump groups are disclosed in documents EP2815094 A1, WO2014/078255 A2, WO00/57987 A1, WO2005/090841 A1 and WO2015/013273 A1.

The purpose of this invention is to provide a valve group suitable to ensure effective regulation of the cool i ng liquid and solving said problems.

This purpose is achieved by a pump group according to claim1 comprising said valve group.

The characteristics and advantages of the valve group according to this invention will be apparent from the following description, given by way of non-limiting example, in accordance with the accompanying figures, wherein:

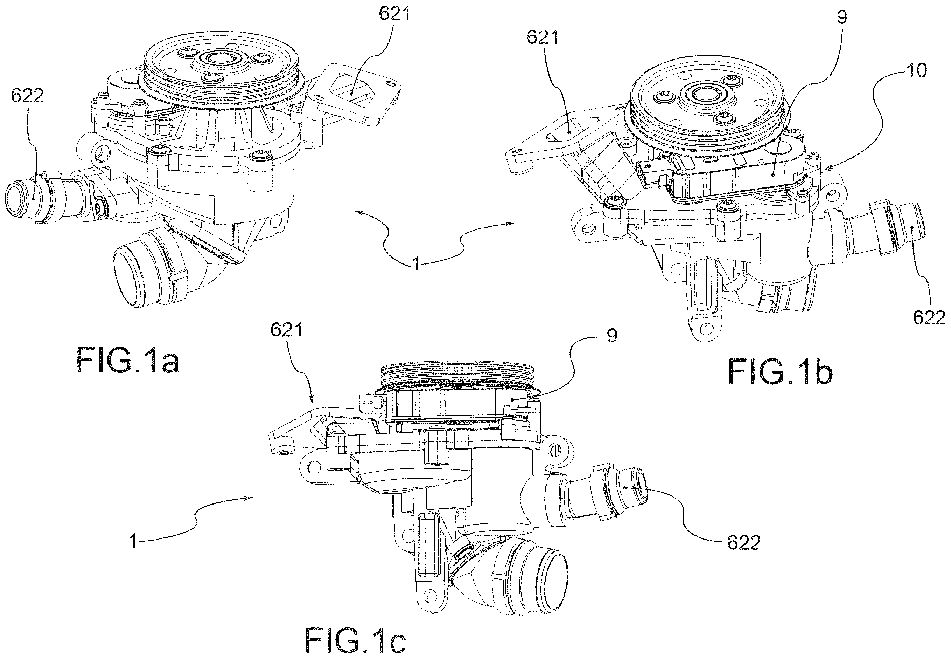

- Figures 1a, 1b and 1c are three perspective views of the pump group comprising the valve group of this invention, accordi ng to a preferred embodiment;

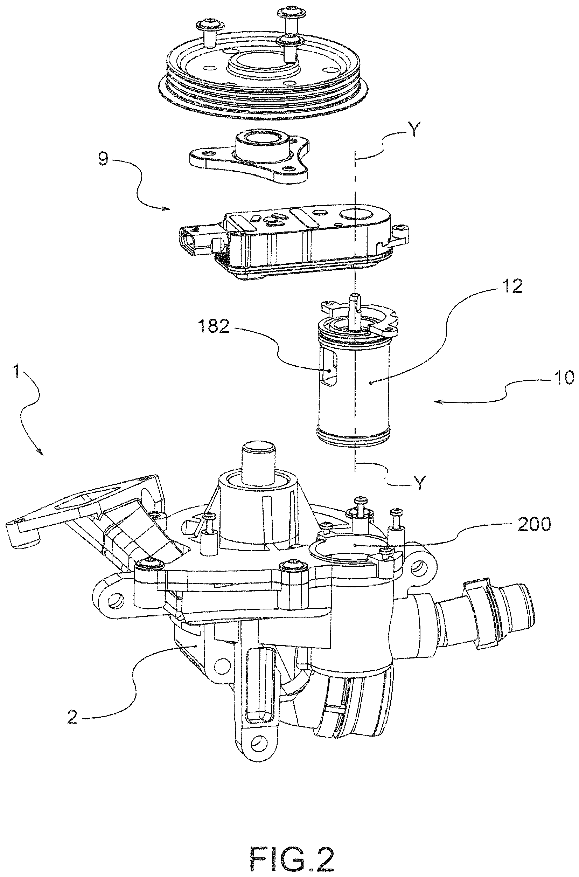

- Figure 2 is an exploded perspective view of the pump group;

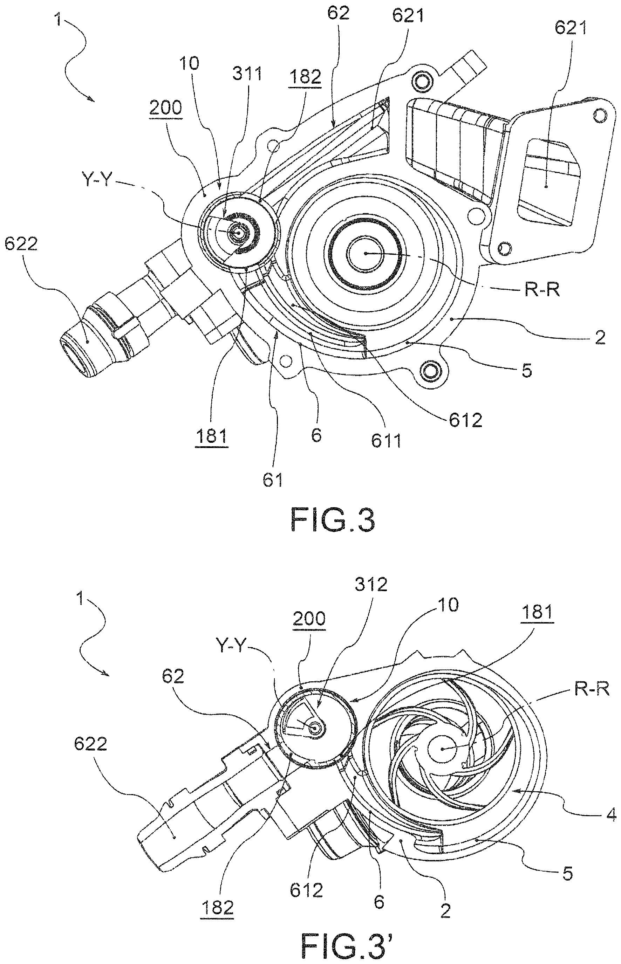

- Figures 3 and 3' show two cross-sectional views of the pump group in which the valve group is in an open configuration respectively along the plane V-V and the plane VI-VI;

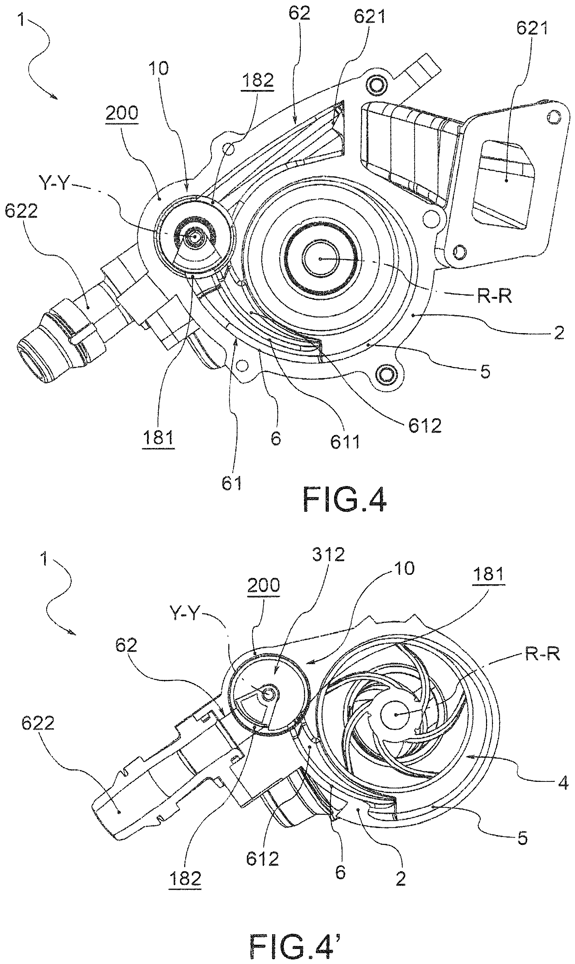

- Figures 4 and 4' show two cross-sectional views of the pump group in which the valve group is in a closed configuration respectively along the plane V-V and the plane VI-VI;

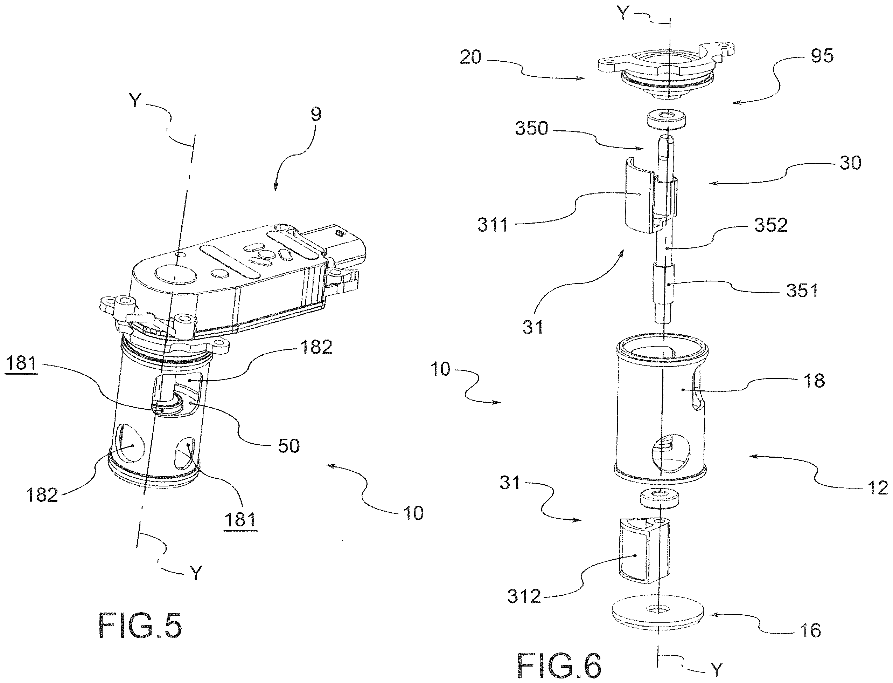

- Figure 5 shows a perspective view of the valve group and of the actuation means comprised in the pump group shown in the preceding figures;
- Figure 6 shows an exploded perspective view of the valve group of this invention, according to a preferred embodiment.

According to an embodiment of this invention, reference nurrber 1 indicates a pump group of a cooling circuit of a vehicle; in the accompanying figures, reference nurrber 10 also indicates a valve group according to this invention.

The pump group 1 comprises a pump body 2 and an impeller 4 housed in said pump body 2, for example of substantially circular shape, preferably of the radial type. The pump body 2 is connectable to the cooling circuit of the engine and, in particular, is connectable to a section of aspiration circuit, upstream from which the liquid is aspirated, and to a section of output circuit, downstream to which the liquid is fed towards the engine and further corrponents under pressure. The impeller 4, set in rotation about an impeller axis R-R, is suitable to aspirate the cooling liquid from the aspiration section and to send it under pressure to the out put section.

In a preferred embodiment, the pump body 2 comprises an impeller chamber 5, preferably in the shape of a volute, suitable to contain the impeller er 4 and a predefined quantity of cooling liquid.

The pump body 2 downstream of the impeller chamber 5 comprises a delivery channel 6, fluidically connected with the output section of the cooling system through which flows the cooling liquid moved by the impeller 4.

Furthermore, the pump body 2 comprises a housing compartment 200 in which the valve group 10 is extractably insertable.

Preferably, the housing compartment 200 is formed transversely to the delivery channel 6, therefore, the housing compartment 200 and the valve group 10 housed in it, identify upstream at least one inlet delivery channel 61 and downstream outlet delivery channels 62. Preferably, the inlet delivery channel 61, or the outlet delivery channels in the case there is a plurality, are fluidically connected to the impeller chamber 5 presenting the trajectory of its volute and, in some Embodiments are an integral part of said volute.

Each outlet delivery channel 62 is suitable to allow the flow of cooling liquid in a respective circuit, for example a first specific cooling circuit for cooling the engine, and a second specific cooling circuit for cooling further components comprised in the vehicle.

The valve group 10 is suitable to regul at e on command the passage of the cooling liquid along the delivery channel 6, thus regulating the in flow of cooling liquid towards the outlet delivery channel s 62.

Preferably, as fully described below, the valve group 10 is suitable to be configured in:
- an open configuration, in which the passage of liquid is allowed;
- an obturation configuration in which the passage through the delivery channel 6 is obstructed, i.e., the passage between the at least one inlet delivery channel 61 and the outlet delivery channel s 62;
- in a possible regulation or choking configuration in which the passage of liquid is, instead, regulated or choked, thus regulating the flow of cooling liquid between the at least one inlet delivery channel 61 and the outlet delivery channels 62.

In some preferred embodiments, then, with the valve group 10 commanded in the obturation configuration, the cooling liquid maintained agitated by the impeller 4 in rotation remains in the impeller chamber 5 and into the inlet delivery channel 61.

The valve group 10 extends around a main axis Y-Y; for example, said main axis Y-Y has a transverse direction, preferably perpendicular, to the direction along which the cooling liquid flows.

Moreover, preferably, the valve group 10 comprises an obturator group 30 rotatable around said main rotation axis Y-Y; in particular, as fully described below, the above mentioned configurations in which the valve group 10 is commandable correspond to predefined angular positions of the obturator group 30.

The obturator group 30 comprises a plurality of active portions 31 arranged axially side by side along the main axis Y-Y respectively commandable in rotation.

The active portions 311, 312 consecutive with each other are positioned angularly offset from one another with respect to said main axis Y-Y. In other words, each active portion 31 has a respective angular position with respect to the main axis Y-Y.

Preferably, the rotation of each active portion 311, 312 corresponds to the regulation of the passage of cooling liquid towards a respective channel of the cooling system In other words, each active portion 311, 312 is suitable to regul ate the amount of cooling liquid flowing towards the respective outlet delivery channel 621, 622 comprised in the pump group 1.

According to the invention, the valve group 1 comprises at least one separation wall 50 located between two consecutive active portions 31 axially consecutive with each other suitable to axially divide a predetermined quantity of cooling liquid respectively towards the two active portions 31. In other words, the valve group 1 is suitable to divide inside it in two distinct ducts, predefined quantities of cooling liquid towards each active portion of the obturator group 30, respectively suitable to regulate the respective passage of the cooling liquid.

In fact, preferably, the obturator group 30 comprises a rotation body 35 that extends along the main axis Y-Y, drivable in rotation, wherein each active portion 31 is integrally connected to said rotation body 35 and driven in rotation by it.

In some preferred embodiments, said rotation body 35 is made in a single element.

In fact, preferably, the rotation body 35 is a rotation shaft 350, which extends and rotates about the main axis Y-Y, to which each active portion 311, 312 is integrally connected.

In further preferred embodiments, the rotation body 35 is constituted, instead, by a plurality of rotation elements each specific for commanding the rotation of a respective active portion.

For example, the rotation body 35 comprises a plurality of rotation shafts 350, which extend and rotate about the main axis Y-Y, wherein each active portion 311, 312 is respectively integrally connected to the respective rotation shaft. Preferably, said rotation shafts are mutually concentric to one another.

According to a preferred embodiment, therefore, the valve group 10 comprises an integral component comprising the obturator group 30 in its entirety, i.e., the active portions 311, 312 and the rotation body 35. For example, in a preferred embodiment, this component is a single piece component and is suitable to be extractably inserted in the respective housing 200. Preferably, in said embodiment, the separation wall 50 is in turn comprised and is an integral part of the obturator group 30.

According to a further preferred embodiment, the valve group 10 comprises a valve body 12, preferably cylindrical, specifically shaped to be extractably inserted in the housing compartment 200 of the pump body 2, through which the cooling liquid is suitable to flow. Preferably, the valve body 12 is suitable to house the active portions 31 of the obturator group 30 (similarly to what shown, in a non-limiting manner, in the attached figures).

According to a preferred embodiment, the valve body 12 comprises a plate 16 on the bottom, side walls 18, projecting axially from the plate 16, and a head 20, which surmounts and unites the side walls 18 on the opposite side to the plate 16.

According to a preferred embodiment, on the side wall 18 of the valve body 10 is formed at least one inlet mouth 181 through which the cooling liquid flows in input and a number of outlet mouths 182 equal to the number of active portions 31 through which the cooling liquid flows towards the respective channels.

Preferably, the valve body 12 comprises a plurality of inlet mouths 181 in equal number to the number of active portions 31.

According to this embodiment, the separation wall 50 is formed on the valve body 12. In other words, in the valve body 12 are identified specific ducts between the respective inlet mouths and the respective outlet mouths mutually separated from each other, through which flows cooling liquid, the passage of which is respectively regulated by the respective active portions 31.

Preferably, the rotation body 35 extends in height along the axis Y-Y through specific openings provided on the separation wall 50; preferably, said openings are sealingly engaged by the rotating body 35.

According to a preferred embodiment, such as that represented by way of example in the figures, the active portions 311, 312 are two. In this embodiment, two ducts are identified internal to the valve body 2 divided by a separation wall 50 identifying two inlet mouths 181 and two outlet mouths 182.

According to a preferred embodiment, the active portions 31 are suitable to operate at the entrance of the housing compartment, i.e., at the mouth of the respective inlet delivery channels 61; preferably, in the embodiment with valve body 12, the active portions 31 are suitable to operate on the respective inlet mouths 181.

Preferably, the active portions 31 have the most diverse shapes. Preferably, the shape of the active portions 31 is, in fact, a function of the quantity of cooling liquid to regulate, for example, as a function of the dimensions and shapes of the respective inlet mouths engageable by the active portions.

In particular, the obturator group comprises active portions 31 the geometric shapes described in several of the Applicant's documents: for example with shape of a circular crown sector similar to the solution shown in document WO2014/068417, or with wedge shape similar to the solution shown in document WO2015/059586; (in this description, active portion 31 means the component that, in these documents, is referred to with the term "obturator"; for the specific characteristics of said embodiments, refer to these documents).

Preferably, in the embodiment with both active portions 31 simultaneously movable by the same rotating body 35, one active portion 311 is also suitable to perform the fail-safe function, so that, in case of failure, both active portions 31 are brought to the open position ensuring the passage of cooling liquid.

This invention covers the pump group 1 comprising the valve group 10 having the described characteristics and embodiments.

The pump body 2 of the purrp group 1 has the characteristics mentioned above, related to the impeller chamber 5, and the delivery section 6.

In particular, the valve body 2 comprises the housing compartment 200 for containing the valve group 10, preferably, having a transverse extension to the delivery section 6. The housing compartment 200 and the valve group 10 inserted in it are suitable to identify, upstream at least one inlet delivery channel 61 and, downstream outlet delivery channels 62; preferably, each active portion 31 of the valve group 10 is suitable to regulate the predefined amount of cooling liquid through the respective outlet delivery channel 62.

The pump group 1 comprising a valve group 10 comprising two active portions 31, the delivery section 6 comprises two outlet delivery channels 62. In an embodiment, the delivery section 6 comprises two inlet delivery channels 61. In a further preferred embodiment, as shown by way of example in the accompanying figures, the inlet delivery channel 61 is constituted by a single channel specially shaped for directing a predetermined quantity of cooling liquid moved by the impeller 4, preferably towards both the active portions 31, for example towards both inlet mouths 181.

In other words, the inlet flow channel 61 has a section, which is to say a shape, suitable to allow the flow of a predefined quantity of cooling fluid towards an active portion and a further predefined quantity of cooling fluid towards another active portion. In other words, in the embodiment comprising two active portions 31, inlet delivery channel 61 is designed to identify a main portion 611 of its section through which flows a predefined quantity of cooling liquid preferably towards a first active portion 311 suitable to regulate the passage of said quantity of cooling liquid towards the main cooling circuit of the engine. Moreover, the inlet delivery channel 61 is designed to identify a secondary portion 612 of its section through which flows a predefined quantity of cooling liquid preferably towards a second active portion 312 suitable to regulate the passage of said quantity of cooling liquid towards the specific by-pass circuit for cooling further components of the vehicle.

According to a preferred embodiment, the pump group 1 also comprises actuation means 9 suitable to act on the obturator group 30 of the valve group 10 to move the respective active portions 31, i.e., to rotate them between the obturation position and open position, and vice versa.

In a preferred embodiment, the actuation means 9 are suitable for moving both active portions 31 simultaneously. In a further preferred embodiment, the actuation means 9 are suitable to rotate an active portion maintaining the position of the other active portion. Preferably, in fact, according to the embodiment of the rotating body 35, the actuation means 9 are designed to move the respective active portions simultaneously or separately.

Innovatively, the valve group described, and the cooling pump that comprises it, are particularly suitable for use as part of a cooling system of a vehicle, allowing an effective regulation of the cooling liquid towards both the vehicle engine and further components.

Advantageously, valve group and pump group are suitable to achieve the intended purposes, avoiding the creation of new occupied spaces in the vehicle. Advantageously, in fact, the valve group is suitable to allow an effective management of predefined quantities of cooling liquid to the engine and other components, occupying substantially the same space typical of the valve group solutions of the prior art.

A further advantage linked to the valve group is that of allowing the design of the positioning of the delivery channels as a function of the needs and spaces present in the vehicle. One such non-limiting example is the pump group in the accompanying figures in which the outlet delivery channels with substantially opposite trajectories, substantially at 180°, is visible.

A still further advantage is that of allowing the achievement of the aforesaid purposes and advantages in a manner that does not adversely influence the flow of cooling liquid; advantageously, in fact, the motion of the cooling liquid through the valve group is not affected by the creation of unwanted turbulence, but, in their open position, the active portions are suitable for conveying the cooling liquid towards the respective channel.

Advantageously, as a function of the needs, and for example of the flow of cooling liquid, the respective active portions of the obturator group are different from each other since they are designable totally separately from each other.

Moreover, advantageously, in some embodiments the two portions are manageable independently from each other. Or advantageously, they are rotationally manageable simultaneously with each other.

Advantageously, in the embodiment with the active portions connected to each other, the active portion specifically designed to manage a higher flow rate of cooling liquid is also suitable to manage the fail-safe function of the obturator group.

It is clear that one skilled in the art, in order to meet specific needs, may make changes to the valve group and pump described above, all contained within the scope of protection defined by the following claims.

## Claims

1. Pump group (1) of a cooling circuit of a vehicle, comprising:
- a valve group (1) suitable to regulate the passage of a predefined quantity of cooling liquid in the cooling circuit;
- a pump body (2) having a housing compartment (200) in which said valve group (10) is extractably insertable;
- an impeller (4) that aspirates cooling liquid through an aspiration section and sends said cooling liquid under pressure to a delivery channel (6) comprised in the pump body (2) suitable to be fluidly connected to the cooling circuit;
wherein the housing compartment (200) is formed transversely to the delivery channel (6) identifying, upstream of the valve group (10), at least one inlet delivery channel (61) and, downstream of the valve group (10), outlet delivery channels (62);
the pump group (1) being **characterized by** the fact that the valve group (10) extends along a main axis (Y-Y) and comprises:
- an obturator group (30) rotatable about said axis main (Y-Y), wherein the obturator group (30) comprises a plurality of active portions (31), separated from each other, arranged axially side by side along the main axis (Y-Y) commandable in rotation, wherein the consecutive active portions (311, 312) are positioned angularly offset from each other with respect to said main axis (Y-Y), wherein the rotation of each active portion (311, 312) corresponds to the regulation of the passage of the cooling fluid towards a respective channel of the cooling system through the respective outlet delivery channel (621, 622);
- at least one separation wall (50) located between two consecutive active portions (311, 312) suitable to axially divide the intern of the valve group (10) in distinct ducts, in such a way to divide predefined quantities of cooling liquid towards each active portion (311, 312).

2. Pump group (1) according to any of the preceding claims, wherein the obturator group (30) comprises a rotation body (35) that extends along the main axis (Y-Y), and is drivable in rotation, wherein each active portion (31) is integrally connected to said rotation body (35) and driven in rotation by it.

3. Pump group (1) according to claim 2, wherein the rotation body (35) consists of a rotation shaft (350), which extends and rotates about the main axis (Y-Y), to which each active portion (311, 312) is integrally connected.

4. Pump group (1) according to claim 2, wherein the rotation body (35) comprises a plurality of rotation shafts (350), which extend and rotate about the main axis (Y-Y), wherein each active portion (311, 312) is respectively integrally connected to the respective rotation shaft.

5. Pump group (1) according to any of the preceding claims, wherein the valve group (10) comprises a valve body (12), preferably cylindrical, specifically shaped to be extractably inserted in the housing compartment (200) of the pump body (2), through which the cooling liquid is suitable to flow, wherein the valve body (12) is suitable to house the active portions (31) of the obturator group.

6. Pump group (1) according to claim 5, wherein the valve body (12) comprises a side wall (18) on which is formed at least one inlet mouth (181) through which the cooling liquid flows in input and a number of outlet mouths (182) equal to the number of active portions (31) through which the cooling liquid flows towards the respective channels.

7. Pump group (1) according to claim 6, wherein the valve body (12) comprises a plurality of inlet mouths (181) in equal number to the number of active portions (31).

8. Pump group (1) according to any of claims 5 to 7, wherein the separation wall (50) is formed on the valve body (12).

9. Pump group (1) according to any of the previous claims, wherein the active portions (311, 312) are two.

10. Pump group (1) according to any of the preceding claims, comprising actuation means (9) suitable to act on the obturator group (30), to move the active portions (311, 312), to rotate them between the obturation position and open position, and vice versa.

11. Pump group (1) according to any of the preceding claims, wherein the actuation means (9) are suitable to rotate an active portion (311) maintaining the position of the other active portion (312).

12. Pump group (1) according to any of the preceding claims, wherein the inlet delivery channel (61) is specially shaped to direct a predefined quantity of cooling liquid moved by the impeller (4) towards an active portion (311) and a further predefined quantity of cooling liquid towards another active portion (312).

## Patentansprüche

1. Pumpengruppe (1) eines Kühlkreislaufs eines Fahrzeugs, umfassend:
- eine Ventilgruppe (10) die geeignet ist, den Durchtritt einer vordefinierten Menge an Kühlflüssigkeit in dem Kühlkreislauf zu regulieren,
- einen Pumpenkörper (2) mit einer Gehäusekammer (200), in welche die Ventilgruppe (10) herausnehmbar einsetzbar ist,
- ein Laufrad (4), das Kühlflüssigkeit durch einen Ansaugabschnitt ansaugt und die Kühlflüssigkeit unter Druck zu einem Zufuhrkanal (6) leitet, der in dem Pumpenkörper (2) enthalten ist, geeignet, mit dem Kühlkreis fluidisch verbunden zu sein;
- wobei das Gehäusefach (200) quer zu dem Zufuhrkanal (6) ausgebildet ist, der stromaufwärts der Ventilgruppe (10) zumindest einen Einlasszufuhrkanal (61) und stromabwärts der Ventilgruppe (10) Auslasszufuhrkanäle (62) identifiziert;
- wobei die Pumpengruppe (1) durch die Tatsache gekennzeichnet ist, dass sich die Ventilgruppe (10) entlang einer Hauptachse (Y-Y) erstreckt und umfasst:
- eine Obturatorgruppe (30), die um die Hauptachse (Y-Y) drehbar ist, wobei die Obturatorgruppe (30) eine Mehrzahl voneinander beabstandeter aktiver Abschnitte (31) umfasst, die axial Seite an Seite entlang der Hauptachse (Y-Y) angeordnet sind und in Rotation versetzt werden können, wobei die aufeinanderfolgenden aktiven Abschnitte (311, 312) in Bezug auf die Hauptachse (Y-Y) zueinander winkelversetzt angeordnet sind, wobei die Rotation jedes aktiven Abschnitts (311, 312) der Regulierung des Durchtritts der Kühlflüssigkeit zu einem jeweiligen Kanal des Kühlsystems durch den jeweiligen Auslasszufuhrkanal (621, 622) entspricht;
- zumindest eine Trennwand (50), die sich zwischen zwei aufeinanderfolgenden aktiven Abschnitten (311, 312) befindet und geeignet ist, das Innere der Ventilgruppe (10) axial in verschiedene Kanäle zu teilen, und zwar so, dass vordefinierte Mengen an Kühlflüssigkeit in Richtung jedes aktiven Abschnitts (311, 312) aufgeteilt werden.

2. Pumpengruppe (1) nach einem der vorhergehenden Ansprüche, wobei die Obturatorgruppe (30) einen Rotationskörper (35) umfasst, der sich entlang der Hauptachse (Y-Y) erstreckt und in Rotation versetzbar ist, wobei jeder aktive Abschnitt (31) integral mit dem Rotationskörper (35) verbunden ist und von diesem in Rotation versetzt wird.

3. Pumpengruppe (1) nach Anspruch 2, wobei der Rotationskörper (35) aus einer Rotationswelle (350) besteht, die sich um die Hauptachse (Y-Y) erstreckt und dreht, mit der jeder aktive Abschnitt (311, 312) integral verbunden ist.

4. Pumpengruppe (1) nach Anspruch 2, wobei der Rotationskörper (35) eine Mehrzahl von Rotationswellen (350) umfasst, die sich um die Hauptachse (Y-Y) erstrecken und drehen, wobei jeder aktive Abschnitt (311, 312) jeweils integral mit der jeweiligen Drehwelle verbunden ist.

5. Pumpengruppe (1) nach einem der vorhergehenden Ansprüche, wobei die Ventilgruppe (10) einen Ventilkörper (12), vorzugsweise zylindrisch, umfasst, der spezifisch geformt ist, um herausnehmbar in die Gehäusekammer (200) des Pumpenkörpers (2) eingesetzt zu sein, durch den die Kühlflüssigkeit fließen kann, wobei der Ventilkörper (12) geeignet ist, die aktiven Abschnitte (31) der Obturatorgruppe aufzunehmen bzw. unterzubringen.

6. Pumpengruppe (1) nach Anspruch 5-6, wobei der Ventilkörper (12) eine Seitenwand (18) umfasst, an der zumindest eine Einlassmündung (181), durch welche die Kühlflüssigkeit in Einlass fließt, und eine Anzahl von Auslassmündungen (182) ausgebildet sind, die gleich der Anzahl der aktiven Abschnitt (31) sind, durch welche die Kühlflüssigkeit zu den jeweiligen Kanälen fließt.

7. Pumpengruppe (1) nach Anspruch 6, wobei der Ventilkörper (12) eine Mehrzahl von Einlassmündungen (181) in der gleichen Anzahl wie die Anzahl von aktiven Abschnitten (31) umfasst.

8. Pumpengruppe (1) nach einem der Ansprüche 5 bis 7, wobei die Trennwand (50) an dem Ventilkörper (12) ausgebildet ist.

9. Pumpengruppe (1) nach einem der vorhergehenden Ansprüche, wobei die aktiven Abschnitte (311, 312) zwei sind.

10. Pumpengruppe (1) nach einem der vorhergehenden Ansprüche, umfassend Betätigungsmittel (9), die geeignet sind, auf die Obturatorgruppe (30) einzuwirken, um die aktiven Abschnitte (311, 312) zu bewegen, um sie zwischen der Absperrposition und der offenen Position zu drehen und umgekehrt.

11. Pumpengruppe (1) nach einem der vorhergehenden Ansprüche, wobei die Betätigungsmittel (9) geeignet sind, einen aktiven Abschnitt (311) zu drehen, wobei die Position des anderen aktiven Abschnitts (312) beibehalten wird.

12. Pumpengruppe (1) nach einem der vorhergehenden Ansprüche, wobei der Einlasszufuhrkanal (61) spezifisch geformt ist, um eine vordefinierte Menge an Kühlflüssigkeit, die von dem Laufrad (4) bewegt wird, in Richtung eines aktiven Abschnitts (311) und eine weitere vordefinierte Menge an Kühlflüssigkeit in Richtung eines anderen aktiven Abschnitts (312) zu leiten.

## Revendications

1. Groupe pompe (1) d'un circuit de refroidissement d'un véhicule, comprenant :
- un groupe valve (1) convenant pour réguler le passage d'une quantité prédéfinie d'un liquide de refroidissement dans le circuit de refroidissement ;
- un corps de pompe (2) ayant un compartiment de logement (200) dans lequel ledit groupe valve (10) peut être inséré avec faculté d'extraction ;
- une hélice (4) qui aspire le liquide de refroidissement à travers une section d'aspiration et envoie ledit liquide de refroidissement sous pression à un canal de distribution (6) compris dans le corps de pompe (2) convenant pour être raccordé fluidiquement au circuit de refroidissement ;
dans lequel le compartiment de logement (200) est formé transversalement au canal de distribution (6) identifiant, en amont du groupe valve (10), au moins un canal de distribution d'admission (61) et, en aval du groupe valve (10), de canaux de distribution de refoulement (62) ;
le groupe pompe (1) étant **caractérisé par le fait que** le groupe valve (10) s'étend le long d'un axe principal (Y-Y) et comprend :
- un groupe obturateur (30) pouvant tourner autour dudit axe principal (Y-Y), dans lequel le groupe obturateur (30) comprend une pluralité de portions actives (31), séparées les unes des autres, agencées axialement côte à côte le long de l'axe principal (Y-Y) pouvant être commandées en rotation, dans lequel les portions actives consécutives (311, 312) sont positionnées angulairement décalées les unes des autres par rapport audit axe principal (Y-Y), dans lequel la rotation de chaque portion active (311, 312) correspond à la régulation du passage du fluide de refroidissement vers un canal respectif du système de refroidissement à travers le canal de distribution de refoulement (621, 622) respectif ;
- au moins une paroi de séparation (50) située entre deux portions actives consécutives (311, 312) convenant pour diviser axialement l'intérieur du groupe valve (10) en conduits distincts, de manière à diviser des quantités prédéfinies de liquide de refroidissement vers chaque portion active (311, 312).

2. Groupe pompe (1) selon l'une quelconque des revendications précédentes, dans lequel le groupe obturateur (30) comprend un corps de rotation (35) qui s'étend le long de l'axe principal (Y-Y), et peut être entraîné en rotation, dans lequel chaque portion active (31) est solidairement raccordée audit corps de rotation (35) et entraînée en rotation par ce dernier.

3. Groupe pompe (1) selon la revendication 2, dans lequel le corps de rotation (35) consiste en un arbre de rotation (350), qui s'étend et tourne autour de l'axe principal (Y-Y), auquel chaque portion active (311, 312) est solidairement raccordée.

4. Groupe pompe (1) selon la revendication 2, dans lequel le corps de rotation (35) comprend une pluralité d'arbres de rotation (350), qui s'étendent et tournent autour de l'axe principal (Y-Y), dans lequel chaque portion active (311, 312) est respectivement solidairement raccordée à l'arbre de rotation respectif.

5. Groupe pompe (1) selon l'une quelconque des revendications précédentes, dans lequel le groupe valve (10) comprend un corps de valve (12), de préférence cylindrique, spécifiquement conformé pour être inséré avec faculté d'extraction dans le compartiment de logement (200) du corps de pompe (2), à travers lequel le liquide de refroidissement peut convenablement s'écouler, dans lequel le corps de valve (12) convient pour loger les portions actives (31) du groupe obturateur.

6. Groupe pompe (1) selon les revendications 5 et 6, dans lequel le corps de valve (12) comprend une paroi latérale (18) sur laquelle est formée au moins une bouche d'admission (181) à travers laquelle le liquide de refroidissement s'écoule en entrée et un nombre de bouches de sortie (182) égal au nombre de portions actives (31) à travers lesquelles le liquide de refroidissement s'écoule vers les canaux respectifs.

7. Groupe pompe (1) selon la revendication 6, dans lequel le corps de valve (12) comprend une pluralité de bouches d'admission (181) de nombre égal au nombre de portions actives (31).

8. Groupe pompe (1) selon l'une quelconque des revendications 5 à 7, dans lequel la paroi de séparation (50) est formée sur le corps de valve (12).

9. Groupe pompe (1) selon l'une quelconque des revendications précédentes, dans lequel les portions actives (311, 312) sont au nombre de deux.

10. Groupe pompe (1) selon l'une quelconque des revendications précédentes, comprenant des moyens d'actionnement (9) convenant pour agir sur le groupe obturateur (30), pour déplacer les portions actives (311, 312), pour les faire tourner entre la position d'obturation et la position ouverte, et vice versa.

11. Groupe pompe (1) selon l'une quelconque des revendications précédentes, dans lequel les moyens d'actionnement (9) conviennent pour faire tourner une portion active (311) en maintenant la position de l'autre portion active (312).

12. Groupe pompe (1) selon l'une quelconque des revendications précédentes, dans lequel le canal de distribution d'admission (61) est spécifiquement conformé pour diriger une quantité prédéfinie de liquide de refroidissement déplacé par l'hélice (4) vers une portion active (311) et une quantité prédéfinie supplémentaire de liquide de refroidissement vers une autre portion active (312).
